# EUROPÄISCHE PATENTSCHRIFT

(11) **EP 3 718 044 B1**
(45) Veröffentlichungstag und Bekanntmachung des Hinweises auf die Patenterteilung: **27.07.2022**
(21) Anmeldenummer: 18808337.2
(22) Anmeldetag: 26.11.2018
(51) Int. Cl.: G06K 7/10

(54) **CODELESEVORRICHTUNG UND VERFAHREN ZUR ONLINE-VERIFIKATION EINES CODES**
CODE READER DEVICE AND METHOD FOR ONLINE VERIFICATION OF A CODE
DISPOSITIF DE LECTURE DE CODE ET PROCÉDÉ DE VÉRIFICATION EN LIGNE D'UN CODE

(30) Priorität: 27.11.2017 DE 102017128032
(43) Veröffentlichungstag der Anmeldung: 07.10.2020
(73) Patentinhaber: Cretec GmbH, 63546 Hammersbach (DE)
(72) Erfinder: TREBING, Alexander, 63546 Hammersbach (DE); WELZL, Andreas, 92637 Weiden i. d. Oberpfalz (DE); GÜNTNER, Rainer, 63546 Hammersbach (DE)
(74) Vertreter: Stoffregen, Hans-Herbert
(86) Internationale Anmeldenummer: PCT/EP2018/082476
(87) Internationale Veröffentlichungsnummer: WO 2019/101979

(56) Entgegenhaltungen:
- EP-A1- 2 677 492
- DE-A1-102013 110 899
- DE-A1-102015 214 331
- US-A- 5 218 187
- US-A- 5 410 141
- US-A1- 2015 048 166
- US-A1- 2017 286 732
- US-B1- 9 569 653

## Beschreibung

Die Erfindung bezieht sich auf eine Codelesevorrichtung nach dem Oberbegriff des Anspruchs 1 sowie auf ein Verfahren zur automatischen Verifikation eines Codes nach dem Oberbegriff des Anspruchs 11. Ferner bezieht sich die Erfindung auf ein modulares Codelesegerät.

Eine Codelesevorrichtung sowie ein Verfahren zur Online-Verifikation eines Codes ist aus der EP 2 677 492 A1 bekannt.

Ein kamerabasierter Codeleser nimmt, statt Codebereiche abzuscannen, mit Hilfe eines pixelaufgelösten Bildsensors Bilder der Objekte mit dem darauf befindlichen Code auf. Anschließend extrahiert eine Bildauswertungssoftware aus diesen Bildern die Codeinformation. Kamerabasierte Codeleser kommen problemlos auch mit anderen Codearten als eindimensionale Strichcodes zurecht, die wie ein Matrixcode auch zweidimensional aufgebaut sind und mehr Informationen zur Verfügung stellen.

Um hohe Leseraten sicherzustellen, ist auch die Qualitätskontrolle von Codes wichtig. Die Beurteilung der Codequalität wird auch als Codeverifikation bezeichnet. Dabei werden gewisse Codeeigenschaften überprüft, welche für die Codelesung erforderlich sind. Dieser Vorgang kann eine Decodierung beinhalten, deren Ergebnis aber schon vorab bekannt sein kann und sodann lediglich bestätigt werden soll. Für die Codequalität sind Standards etwa in der ISO16022, ISO15415, ISO15416 oder ISO29158 vereinbart.

In der EP 2 677 492 A1 ist ausgeführt, dass eine Codeverifikation herkömmlich in einem Offline-Modus erfolgt, in dem bestimmte physikalische Rahmenbedingungen vorgegeben sind. Die Codeverifikation soll reproduzierbar und zuverlässig den Prüfling bewerten und nicht Artefakte des Kamera-Setups, wie Erfassungswinkel, gewählte Bildverstärkung oder Belichtungszeit. Dazu werden Vorgaben an die Lesesituation während der Verifikation gemacht.

Beispielsweise wird eine Codeverifikation in der Bildmitte empfohlen, um am Randbereich des Objektivs auszuweichen und dazu wird eine Zielmarkierung vorgegeben, wo der Prüfling platziert werden sollte.

Zu den festzuhaltenden Rahmenbedingungen zählen weiterhin eine bekannte Normbeleuchtung ohne Störlicht aus einer oder mehreren bekannten Lichtquellen, mehrere und periodisch wiederkehrende Kalibrierzyklen, ein fester und nicht veränderbarer Leseabstand zwischen Prüfling und Objektiv und insgesamt die Vorgabe einer definierten Erfassungsposition sowohl was die Lage des Codelesers als auch des zu prüfenden Codes angeht.

Solche Randbedingungen sind unter reellen Bedingungen im Online-Einsatz praktisch nicht zu erfüllen.

Die Handhabung solcher Verifikationssysteme setzt eine hohe Qualifikation des Mitarbeiters voraus.

In der EP 2 677 492 A1 wird zur Vereinfachung der Codeverifikation ein Codeleser mit einem Bildsensor zur Erzeugung von in Pixel auflösenden Bildern eines Erfassungsbereichs vorgeschlagen, mit einer Decodiereinheit, um Codebereiche in den Bildern zu identifizieren und deren codierte Informationen auszulesen, sowie mit einer Verifikationseinheit zur Beurteilung der Codequalität nach vorgegebenen Kriterien.

Dabei ist die Verifikationseinheit dafür ausgebildet, für die Verifikation zunächst aus den Codebereichen mittels Bildbearbeitung ein normiertes Verifikationsbild des Codes zu erzeugen.

Die in der EP 2 677 492 A1 offenbarte Lehre geht von dem Gedanken aus, das übliche Vorgehen bei der Codeverifikation umzukehren. Anstatt für feste, standardgemäße physikalische Randbedingungen zu sorgen, werden die Gegebenheiten vor Ort hingenommen. Die standardisierten Bedingungen werden dann im Nachhinein durch Bildbearbeitung hergestellt. Dabei entsteht ein normiertes Verifikationsbild, anhand dessen die Codequalität beurteilt wird.

Bei diesem Verfahren muss jedoch vor jeder Änderung des Codes, Objektes oder Leseabstandes eine Kalibrierung erfolgen, was wiederum eine hohe Qualifikation des Bedieners voraussetzt.

Die US 2017/0286732 A1 betrifft ein Strichcodelesesystem mit einer Strichcodeleseeinheit, die an einem mobilen Gerät befestigt werden kann. Dabei kann das Lesegerät ein optisches System beinhalten, das konfiguriert ist, um die Beleuchtung einer Weißlichtquelle des mobilen Geräts anzupassen und auf eine Zieloberfläche zu projizieren. Dabei können Kalibrierdaten auf eine Beziehung zwischen dem Oberflächenabstand und mindestens einem Merkmalsversatz der Zielbeleuchtung hinweisen.

Die DE 10 2013 110 899 A1 betrifft ein Bildverarbeitungssystem mit einer Kamera, die einen Imager und eine Prozessor-Anwendung umfasst. Die Prozessor-Anordnung beinhaltet einen Pre-Prozessor, der mit dem Imager verbunden ist und mit einer ersten Bildfrequenz Bilder von dem Imager empfängt und vorverarbeitet und einen Multicore-Prozessor, der vorverarbeitete Bilder vom Pre-Prozessor empfängt und Bildverarbeitungsaufgaben daran durchführt, um Ergebnisse bezüglich der Informationen in den Bildern zu generieren.

Die US 9,569,653 B1 betrifft ein System und ein Verfahren zum Bereitstellen von maschinenlesbaren Symbolen, die das Lesen von Teilemarkierungen für einen Benutzer vereinfachen sollen. Eine Dunkelfeldbeleuchtung kann Streustrahlung in einer Ebene erzeugen, die in Bezug auf eine Ebene geneigt ist, die senkrecht zu einer optischen Achse des maschinenlesbaren Symbols steht. Dadurch soll eine Konfiguration bereitgestellt werden, die unempfindlich gegenüber unerwünschter Streustrahlung ist.

Die US 2015/0048166 A1 betrifft einen Aufsatz für ein mobiles Gerät zum Lesen von Strichcodes. Der Aufsatz umfasst ein optisches System und/oder ein Beleuchtungssystem, welches mit der Kamera des mobilen Geräts zusammenarbeitet, um den Strichcode zu erfassen.

Die DE 10 2015 214 331 A1 betrifft eine Scannereinrichtung, die zum Erfassen eines einoder zweidimensionalen optischen Codes ausgebildet ist. Die Scannereinrichtung weist ein erstes, einen Scanner aufweisendes Modul auf, das mittels einer Halterung auf dem Handrücken eines Benutzers befestigbar war oder befestigt ist sowie ein am Körper des Benutzers tragbares und mit dem ersten Modul zusammenwirkendes zweites Modul auf, das eine Schnittstelle zur drahtlosen Übertragung von von dem Scanner erfassten Daten aufweist.

Die US 5,218,187 A betrifft ein Handgerät zur Erfassung von Daten mit einem mobilen Aufbau, umfassend ein Basismodul mit einer Tastatur und einer Anzeigeeinheit. Ein Datenund Kommunikationsmodul kann aus einer Vielzahl von verschiedenen Daten- und Kommunikationsmodulen ausgewählt werden. Das Basismodul umfasst eine mikroprozessorgesteuerte Datenkommunikationseinheit mit einem vordefinierten Protokoll.

Die US 5,410,141 A betrifft ein Handgerät zur Erfassung von Daten mit austauschbaren Modulen.

Davon ausgehend liegt der vorliegenden Erfindung die Aufgabe zugrunde, eine Codelesevorrichtung sowie ein Verfahren zur automatischen Verifikation eines Codes der eingangs genannten Art derart weiterzubilden, dass sowohl die Kalibrierung als auch die Verifikation vereinfacht wird.

Die Aufgabe wird erfindungsgemäß durch eine Codelesevorrichtung mit den Merkmalen des Anspruchs 1 sowie durch ein Verfahren zur Online-Verifikation eines Codes mit den Merkmalen des Anspruchs 11 gelöst.

Weitere Einzelheiten, Vorteile und Merkmale der Erfindung ergeben sich nicht nur aus den Ansprüchen, den diesen zu entnehmenden Merkmale - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine schematische Schnittdarstellung einer kamerabasierten Codelesevorrichtung,
- Fig. 2: eine perspektivische Darstellung der Codelesevorrichtung,
- Fig. 3: eine schematische Darstellung einer Vorrichtung zur automatischen Verifikation eines Codes,
- Fig. 4: eine perspektivische Darstellung einer Scanvorrichtung, insbesondere Handscanners und
- Fig. 5 a) - d): Module des Handscanners gemäß Fig. 4.

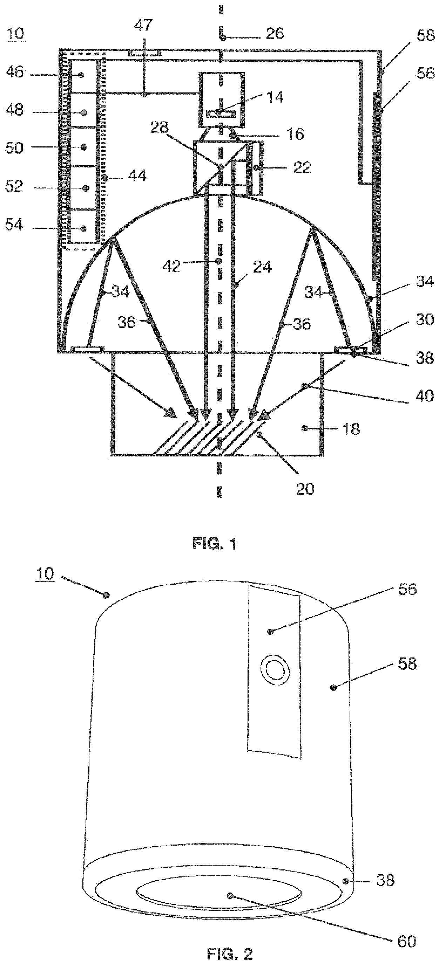

Fig. 1 zeigt eine schematische Schnittdarstellung eines kamerabasierten Codelesers 10. Der Codeleser 10 umfasst eine Kamera 12 mit integriertem Bildsensor 14 mit vorgeschalteter Autofokuseinrichtung 16. Die Kamera 12 nimmt Bilder aus einem Erfassungsbereich 18 auf, in dem sich ein beliebiges Objekt mit einem Code 20 befindet, der verschiedene Größen und verschiedene Leseabstände zu der Kamera 12 haben kann.

Der Codeleser 10 weist zudem mehrere Beleuchtungseinrichtungen auf, wobei eine erste Beleuchtungseinrichtung eine koaxiale Beleuchtung 22 ist, die ein diffuses Hellfeld 24 bereitstellt, welches parallel zu einer optischen Achse 26 verläuft. Die optische Achse 26 durchsetzt den Bildsensor 14 senkrecht und steht ebenfalls senkrecht zu dem Code 20. Die koaxiale Beleuchtung 22 sendet Licht auf einen halbdurchlässigen Spiegel 28, der das diffuse Hellfeld 24 in Richtung des Prüfbereichs 18 bzw. des Codes 20 reflektiert.

Des Weiteren ist eine zweite, vorzugsweise ringförmige Beleuchtung 30 in Form einer Dom-Beleuchtung vorgesehen, die ein diffuses Streufeld 32 gegen einen domförmigen Reflektor 34 sendet, von dem aus ein diffuses Streufeld mit nicht parallel zur optischen Achse 26 verlaufenden Lichtstrahlen auf den Code 20 reflektiert wird.

Ferner ist eine dritte Beleuchtungseinrichtung in Form einer Dunkelfeld-Beleuchtung 38 vorgesehen, die an einem stirnseitigen Rand des Codelesers 10 als ringförmige Beleuchtung ausgebildet ist und Lichtstrahlen 40 in einem geringen Winkel α mit ca. 30° auf den Code 20 abstrahlt.

Die von dem Prüfbereich 18 reflektierten Lichtstrahlen 42 werden durch die Autofokuseinheit 16 empfangen und auf den Bildsensor 14 scharf gestellt. Der Bildsensor, beispielsweise ein CCD- oder CMOS-Chip mit einer Vielzahl von zu einer Zeile oder einer Matrix angeordneten Pixelelementen, erzeugt Bilddaten des Prüfbereichs 18 und gibt diese an eine Auswerteeinheit 44 weiter. Die Auswerteeinheit 44 ist in dem dargestellten Ausführungsbeispiel in dem Codeleser 10 integriert, kann jedoch auch über eine Schnittstelle 47 extern angeschlossen sein. Die Auswerteeinheit 44 umfasst eine Kalibriereinheit 46, eine Dekodiereinheit 48, eine Verifikationseinheit 50, eine Kamerasteuerung 52 sowie eine Beleuchtungssteuerung 54.

Zur Anzeige von Messergebnissen und zur Bedienung des Codelesers 10 ist die Auswerteeinheit 44 mit einer Anzeige- und Bedieneinheit 56 gekoppelt, die in einem Gehäuse 58 des Codelesers 10 integriert oder über die Schnittstelle 47 extern angeschlossen sein kann.

Die Kalibriereinheit 46 dient zur automatischen normgerechten Kalibrierung des Codelesers in Abhängigkeit der Codeart, der Aufbringung des Codes auf dem Gegenstand sowie in Abhängigkeit der Fokussierung, d. h. einem Abstand des Codes 20 von dem Sensor 14.

Hierzu ist vorgesehen, dass in der Kalibriereinheit für jede Fokussierstellung der Autofokuseinheit 16 norm- und abstandsspezifische Kalibrierungsdaten hinterlegt sind. Die Kalibrierungsdaten umfassen Einstellungen für die Beleuchtungen 22, 30, 38, wie Beleuchtungsart, Beleuchtungshelligkeit und/oder Beleuchtungswinkel sowie Einstellungen für die Kamera 14, wie Blende und/oder Belichtungszeit, die der Kamerasteuerung 52 und/oder der Beleuchtungssteuerung 53 zur Einstellung einer Normbeleuchtung bzw. von Normbedingungen bereitgestellt werden.

Die Dekodiereinheit 48 ist ausgebildet, Code 20 zu dekodieren, also die in dem Codes 20 enthaltene Information auszulesen.

Die Verifikationseinheit 50 ist in der Lage, aus einem Eingangsbild durch verschiedene Bearbeitungsschritte das Eingangsbild auszuwerten und Parameter der Verifikation, wie beispielsweise Zellkontrast, Zellmodulation, Refexionsmag. sowie Mindestreflexion auf der Anzeige 56 anzuzeigen.

Die Kamerasteuerung 52 ist ausgebildet, um die Belichtungszeit sowie Blende der Kamera 14 entsprechend den von der Kalibrierungseinheit 46 bereitgestellten Kalibrierungsdaten einzustellen.

Die Beleuchtungssteuerung ist ausgebildet, um die Beleuchtung entsprechend den von der Kalibrierungseinheit 46 zur Verfügung gestellten Kalibrierungsdaten normgerecht einzustellen.

Fig. 2 zeigt in perspektivischer Darstellung eine mögliche Gestaltung des Codelesers 10, mit dem zylinderförmigen Gehäuse 58, wobei in der Wandung des Gehäuses die Bedien- und Anzeigeeinheit 56 integriert ist. Das zylinderförmige Gehäuse 58 weist stirnseitig eine Lichtaustrittsöffnung 60 auf, die von der ringförmigen Beleuchtungseinheit 38 umgeben ist. Die Kamera 14, die Optik-Autofokuseinheit 16 sowie die Beleuchtungen 22, 30 sind im inneren des Gehäuses 58 angeordnet.

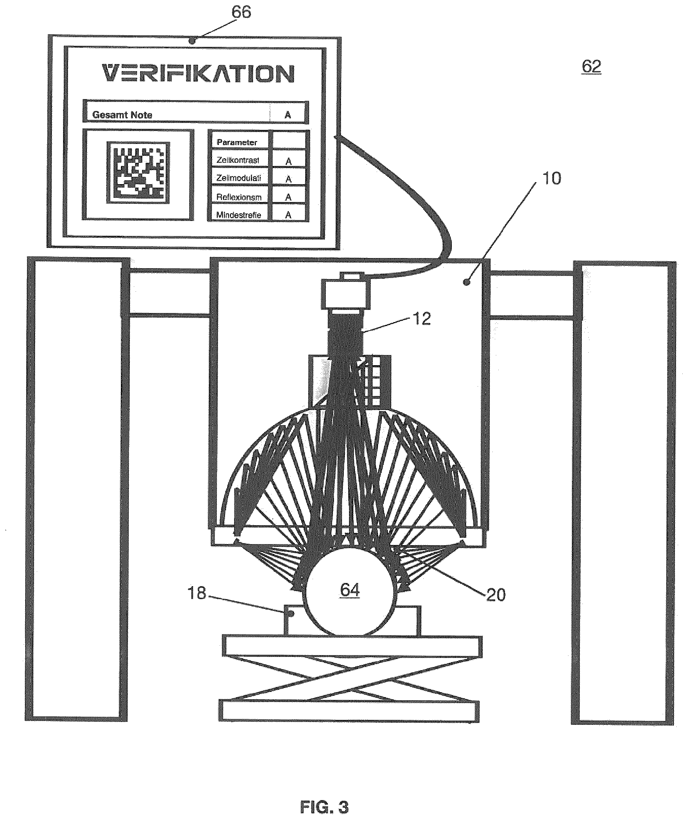

Der in Fig. 2 dargestellte Codeleser 10 kann alternativ als Tischgerät, Handgerät oder in einer Prozessmesseinrichtung 62 integriert sein, wie diese in Fig. 3 dargestellt ist.

Mit Bezug zu Fig. 3 soll die Funktion des Codelesers 10 zur vollautomatischen Online-Verifikation von Codes 20 verschiedener Größen und in verschiedenen Abständen zu der Kamera 12 erläutert werden.

Ein Objekt 64 mit dem zu prüfenden Code 20 wird automatisch oder händisch durch eine Bedienperson in den Prüfbereich 18 des Codelesers 10 gebracht. Auf der externen Anzeigeund Bedieneinheit 56 oder über einen digitalen Eingang wird eine Norm ausgewählt, nach der der Code 20 verifiziert werden soll. Anschließend werden folgende Verfahrensschritte vollautomatisch durchgeführt:
- anfängliche Bildaufnahme
- Überprüfung der Fokussierung
- weitere Bildaufnahme, bis Fokussierung korrekt eingestellt ist (Autofokus)
- Auswahl von norm- und abstandsspezifischen Kalibrierungsdaten auf der Grundlage eines Abstandswertes der korrekten Fokussierung aus einem Speicher
- Überprüfen der Beleuchtungseinstellungen anhand der aus den Kalibrierungsdaten gewonnenen Normvorgaben
- weitere Bildaufnahmen, bis die Beleuchtung des Objektes 60 bzw. des Codes 20 den Normkriterien entspricht
- Auswertungen des bei Normkriterien aufgenommenen Bildes mittels der Verifikationseinheit
- Anzeige von Verifikationsparametern, wie Zellkonstante, Zellmodulation, Reflexionsmag. Und Mindestreflexion durch die Anzeige- und Bedieneinheit
- Speichern der Werte, vorzugsweise in einem internen Speicher oder auf einem USB-Medium
- Ausdrucken eines Protokolls

Im Gegensatz zum Stand der Technik arbeitet der Codeleser 10 vollkommen autark und benötigt keine weitere Recheneinheit, wie Personal Computer. Lediglich eine Spannungsversorgung beispielsweise 24 VD C oder 230 VAC.

Die Qualität des Codes 20 wird eindeutig farblich gekennzeichnet, beispielsweise durch eine Rot-, Gelb- und Grün-Anzeige. Dadurch wird die Verifikation des Codes 20 wesentlich vereinfacht und kann auch durch ungeschultes Personal durchgeführt werden.

Die Auswerteeinheit kann mehrere digitale Ausgänge aufweisen, um neben dem "Online"-Betrieb auch einen "Inline"-Betrieb zu ermöglichen. Die Ausgänge sind individuell programmierbar ausgebildet.

Gemäß der Erfindung stellt die Autofokuseinheit 16, die in dem Codeleser 10 integriert ist, das Bildfeld auf den Code 20 ausgerichtet scharf, so dass Verifikationen mit variablen Abständen zum Codeleser 10 vollautomatisch durchgeführt werden können. Ferner erfolgt eine automatische Kalibrierung, so dass eine erneute Kalibrierung bei geändertem Code oder geändertem Abstand (Leseabstand) nicht erforderlich ist.

Als weiteres wesentliches Merkmal der Erfindung ist zu erwähnen, dass der Codeleser 10 mit externen Beleuchtungsbaugruppen erweitert werden kann, um beispielsweise mit der in der Norm definierten "Low Angle"-Beleuchtung verifizieren zu können.

Hierfür wird zum Beispiel die Beleuchtung 38 mit dem zylinderförmigen Rand des Gehäuses 58 verbunden. Die Beleuchtung kann z. B. extern auf den Rand aufgesetzt und über einen Steckverbinder mit der Auswerteeinheit verbunden werden. Anschließend kann die Beleuchtung über die in der Beleuchtungssteuerung 54 laufende Software entsprechend ausgewählt werden. Der Codeleser 10 verifiziert dann den Code 20 mit der externen Beleuchtung 38. Die verwendete Beleuchtung und weitere Prüfparameter und Beleuchtungseinstellungen werden entsprechend in einem Prüfprotokoll vermerkt.

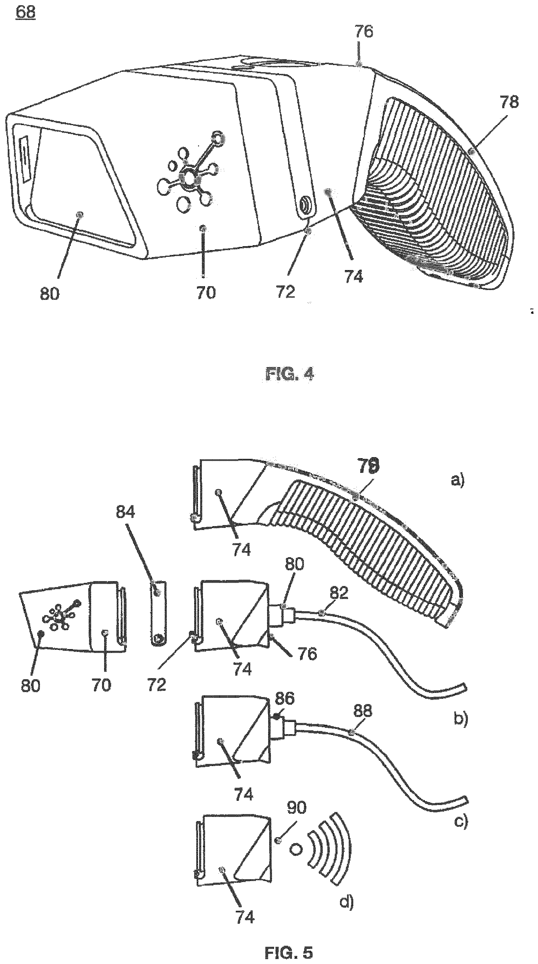

Fig. 4 zeigt in perspektivsicher Darstellung einen modular aufgebauten Handscanner 68, umfassend ein Hauptmodul 70, welches über eine erste elektromechanische Schnittstelle 72 mit einen Zwischenmodul 74 verbindbar ist. Das Zwischenmodul 74 ist über eine zweite elektromechanische Schnittstelle 76 mit einem Griffmodul 78 verbindbar.

Der Handscanner 68 ist als Adaptivsystem ausgebildet, insbesondere für Bildverarbeitungsanwendungen (intelligente Kamera) oder industrielle ID-Anwendungen (1D/2D Codes lesen).

In dem Hauptmodul 70 ist eine Beleuchtungseinheit, eine Bildeinheit, eine Auswerteelektronik sowie vorzugsweise eine Zielmarkierung integriert. In dem Zwischenmodul ist eine Kommunikationseinheit und ggf. eine Energieversorgung integriert.

Adaptiv können an eine weiteren Schnittstelle 80 des Hauptmoduls 70 Erweiterungseinheiten, wie Diffusor-/Polfilter-Einheit, Lichtleiter für Low-Angel- und/oder Darkfield-Beleuchtung sowie verschiedene Optiken adaptiert werden. Das Hauptmodul 70 kann frontseitig adaptiert werden, indem rein mechanisch eine Optikeinheit ausgetauscht wird, um andere Bildfelder und/oder Fokuspunkte zu erlangen. Ferner besteht die Möglichkeit, die interne Beleuchtungseinheit mittels Optiken zu erweitern, um andere Lichteigenschaften, wie beispielsweise direktes Auflicht, diffuses Auflicht, Low-Angel-und/oder Darkfieldlicht zu erzeugen.

Das Zwischenmodul 74 kann rückseitig mittels der elektromechanischen Schnittstelle 76 mit dem Griffmodul 78 verbunden werden, um ein Handgerät zu bilden. Alternativ besteht die Möglichkeit, das Zwischenmodul 74 mit dem Hauptmodul 70 als eigenständiges Gerät (Fix-Mount-System) auszubilden.

Durch die in dem Zwischenmodul 74 integrierte Kommunikationseinheit wird das System funktionsfähig. Die Kommunikationseinheit kommuniziert mit der Auswerteelektronik bzw. einer externen Steuerung. Durch ankoppeln des Zwischenmoduls mit integrierter Kommunikationseinheit kann das Hauptmodul mit jeder verfügbaren Steuerung kommunizieren. Des Weiteren kann in dem Zwischenmodul eine Energieversorgungseinheit integriert sein. Somit kann das Hauptmodul auf geänderte Versorgungsspannungen umgerüstet oder an veränderte Versorgungsspannungen angepasst werden.

Die Kommunikationsbaugruppe kann auch mehrere Kommunikationscontroller beinhalten, um zeitgleich in verschiedenen Protokollen zu kommunizieren. Somit besteht die Möglichkeit, dass das Scangerät in ein ProfiNet-Umfeld eingebunden ist und innerhalb einer Maschine mit ProfiNet kommuniziert, aber parallel auch nach außen über zum Beispiel OPC UA mit einem übergeordneten System oder einer Cloud kommuniziert.

Fig. 5a zeigt das Zwischenmodul 74 mit adaptiertem Griffmodul 78 und ohne Hauptmodul 70.

Fig. 5b zeigt das Zwischenmodul 74, wobei an die elektromechanische Schnittstelle 76 ein Stecker 80 eines Kabels 82 eines ersten Protokolls, wie ProfiNet, angeschlossen ist. Die frontseitige elektromechanische Schnittstelle 72 umfasst einen U-förmigen Bügel 84 mittels dem das Hauptmodul 70 an das Zwischenmodul 74 adaptierbar ist.

Fig. 5c zeigt das Zwischenmodul 74 mit einem weiteren Stecker 86, für ein Kabel 88 eines weiteren Kommunikationsprotokolls.

Fig. 5d zeigt eine Ausführungsform, wobei das Zwischenmodul 74 eine kabellose Funkverbindung 90 zur Verbindung mit einer Steuerung (nicht dargestellt) aufweist.

Das Zwischenmodul, das Hauptmodul sowie das Griffmodul 78 sind für den industriellen Einsatz ausgebildet und bestehen vollständig bzw. abschnittsweise aus einem robusten Material wie zum Beispiel einem Metall.

Vorzugsweise sind die Module einstückig aus einem Materialblock gebildet, wie gefräßt. Alternativ können Materialien, wie Edelstahl, Druckguss, Magnesium oder Carbon verwendet werden. Die Materialien können konventionell durch Drehen, Fräsen, Stanzen und/oder Biegen oder durch ein additives Fertigungsverfahren (3D-Druck) bearbeitet bzw. gefertigt werden.

Wenn eine Anlage erweitert, umgebaut oder abgebaut wird, kann das Bildverarbeitungssystem (Hauptmodul) entsprechend einfach für neue Aufgaben angepasst werden.

Insbesondere kann ein Handscanner bzw. handgeführtes ID-System durch Demontage des Griffmoduls 78 und Anschluss der Stecker 80 bzw. 86 von einem Handscanner in ein fest montiertes System auf einfache Weise umgebaut werden.

Das Zwischenmodul kann sowohl über Kabel 82, 88 als auch mittels eines integrierten Akkus mit Strom versorgt werden. Kommunikationsprotokolle können kabelgebunden oder über Funkverbindung 90 übertragen werden.

Die Daten können direkt an eine Steuerung, einen Rechner oder ein Gateway übertragen werden.

Nach dem Stand der Technik sind Scangeräte in der industriellen Bildverarbeitung und industriellen Identifikation stets mit einer internen Kommunikationsschnittstelle ausgestattet. Daher ist das Scangerät grundsätzlich in seiner Verwendungsmöglichkeit festgelegt. Ob es als fest montiertes Scangerät eingesetzt werden soll/muss, mit welchem Protokoll es kommuniziert und so weiter. Es gibt Scangeräte, in denen eine interne Platine getauscht werden kann. Aber auch diese Geräte (Handscanner) sind darauf festgelegt als Handscanner benutzt zu werden. Lediglich das Kommunikationsprotokoll kann geändert werden.

Das erfindungsgemäße Scangerät ist adaptiv ausgebildet. Das Hauptmodul 70 enthält die bildgebende Einheit, die Auswerteeinheit, die Optikeinheit, die Beleuchtungseinheit sowie die Zielmarkierung. Durch die adaptive Ausbildung besteht die Möglichkeit, das Scangerät sowohl als Handgerät als auch als fix montiertes Gerät zu verwenden wobei das Hauptmodul mit verschiedenen Energie- bzw. Kommunikationsbaugruppen verbunden werden kann, um eine Anpassung an verschiedene Kommunikationsprotokolle zu ermöglichen.

## Patentansprüche

1. Codelesevorrichtung (10), umfassend
eine Kamera (12) mit einem Bildsensor (14) zur Erzeugung von Bildern eines Erfassungsbereichs (18),
eine Autofokuseinheit (16) zur Abbildung eines fokussierten Bildes des Erfassungsbereichs (18) auf den Bildsensor (14) und zur Bestimmung eines Abstands zu einem gelesenen Code (20) oder einem erfassten Objekt,
eine Decodiereinheit (46), um den gelesenen Code (20) in dem fokussierten Bild zu identifizieren und dessen codierte Informationen auszulesen,
eine Kalibriereinheit (48) zur Kalibrierung des Codelesers sowie
eine Verifikationseinheit (50) zur Beurteilung der Codequalität nach vorgegebenen Kriterien, wobei die Autofokuseinheit (16) ausgebildet ist, Codes (20) verschiedener Größe und mit verschiedenem Abstand zu dem Bildsensor (14) automatisch zu fokussieren und einen Abstandswert zu dem gelesenen Code oder dem erfassten Objekt bereitzustellen,
**dadurch gekennzeichnet,**
**dass** die Kalibriereinheit (48) ausgebildet ist, auf der Basis des Abstandswertes normund abstandsspezifische Kalibrierungsparameter bereitzustellen,
**dass** die Codelesevorrichtung (10) eine Beleuchtungssteuerung (52) aufweist, die ausgebildet ist, auf der Basis der norm- und abstandsspezifischen Kalibrierungsparameter mittels einer Beleuchtungseinrichtung (22, 30, 38) eine normund abstandsspezifische Beleuchtung einzustellen und dass die Verifikationseinheit (50) ausgebildet ist, das bei Normbedingungen aufgenommene Bild des Codes (20) hinsichtlich Verifikationsparameter einer ausgewählten vorgegebenen Norm auszuwerten und zu verifizieren und die Qualität des Codes anzuzeigen.

2. Codelesevorrichtung nach Anspruch 1,
**dadurch gekennzeichnet,**
**dass** die Qualität des Codes (20) eindeutig farblich durch eine Rot-, Gelb- oder GrünAnzeige kennzeichenbar ist.

3. Codelesevorrichtung nach Anspruch 1 oder 2,
**dadurch gekennzeichnet,**
**dass** die norm- und abstandsspezifischen Kalibrierungsparameter in einem Speicher der Kalibrierungseinheit (48) gespeichert sind.

4. Codelesevorrichtung nach zumindest einem der vorherigen Ansprüche,
**dadurch gekennzeichnet,**
**dass** die Beleuchtungseinrichtung eine koaxiale Beleuchtung (22) zur Erzeugung eines diffusen Hellfeldes parallel zu einer optischen Achse (26) umfasst.

5. Codelesevorrichtung nach zumindest einem der vorhergehenden Ansprüche,
**dadurch gekennzeichnet,**
**dass** die Beleuchtungseinrichtung eine vorzugsweise ringförmige Dom-Beleuchtung (30) sowie eine Reflexionseinrichtung (34), wie Reflexionsdom, zur Erzeugung eines diffusen Streufeldes nicht parallel zur optischen Achse (26) umfasst.

6. Codelesevorrichtung nach zumindest einem der vorhergehenden Ansprüche,
**dadurch gekennzeichnet,**
**dass** die Beleuchtungseinrichtung eine Dunkelfeld-Beleuchtung (38) zur Erzeugung einer Low-Angle-Beleuchtung umfasst, dass der Beleuchtungswinkel ein spitzer Winkel a, vorzugsweise α = 30° ist und dass die Beleuchtung aus ein oder mehreren Richtungen ausgerichtet ist.

7. Codelesevorrichtung nach Anspruch 5,
**dadurch gekennzeichnet,**
**dass** die Dom-Beleuchtung (30) in einem stirnseitig umlaufenden Rand des Reflektors (34) angeordnet ist.

8. Codelesevorrichtung nach Anspruch 6,
**dadurch gekennzeichnet,**
**dass** die Dunkelfeld-Beleuchtung (38) in einem stirnseitig umlaufenden Rand des Reflektors (34) angeordnet ist.

9. Codelesevorrichtung nach Anspruch 6,
**dadurch gekennzeichnet,**
**dass** die Dunkelfeld-Beleuchtung (38) als separate Beleuchtungseinheit, wie Beleuchtungsring, ausgebildet und mit dem stirnseitig umlaufenden Rand des Reflektors (34) verbindbar ist.

10. Codelesevorrichtung nach zumindest einem der vorhergehenden Ansprüche,
**dadurch gekennzeichnet,**
**dass** die Codelesevorrichtung (10) als Tischgerät ausgebildet ist, dass die Codelesevorrichtung (10) in einem Prozessmessgerät integriert ist und/oder dass die Codelesevorrichtung (10) in einem Handgerät integriert ist.

11. Verfahren zur Online-Verifikation eines Codes (20), der von einem Bildsensor (14) einer Codelesevorrichtung (10) in einem Bild erfasst wird, wobei die codierte Information des Codes (20) ausgelesen und die Codequalität nach vorgegebenen Kriterien beurteilt wird,
**dadurch gekennzeichnet,**
**dass** Codes (20) verschiedener Größe und mit unterschiedlichem Abstand zu dem Bildsensor (14) automatisch fokussiert werden, dass ein Abstandswert des Codes (20) oder des Objektes zu dem Bildsensor (14) bereitgestellt wird, dass auf der Basis des Abstandswertes norm- und abstandsspezifische Kalibrierungsparameter bereitgestellt werden, dass auf der Basis der norm- und abstandsspezifische Kalibrierungsparameter sowie einer ausgewählten vorgegebenen Norm eine automatische Verifikation des unter Normbedingungen aufgenommenen Codes (20) durchgeführt wird, wobei Verifikationsparameter der vorgegebenen Norm ausgewertet werden und eine Qualität des Codes (20) angezeigt wird.

12. Verfahren nach Anspruch 11,
**dadurch gekennzeichnet,**
**dass** die Qualität des Codes (20) eindeutig farblich durch eine Rot-, Gelb- und Grünanzeige gekennzeichnet wird

13. Verfahren nach Anspruch 11 oder 12,
**dadurch gekennzeichnet,**
**dass** auf der Basis der norm- und abstandsspezifischen Kalibrierungsparameter automatisch eine normgerechte Beleuchtung (22, 30, 38) des Codes (20) eingestellt wird.

14. Verfahren nach Anspruch 11 bis 13,
**dadurch gekennzeichnet,**
**dass** die norm- und abstandsspezifischen Kalibrierungsparameter umfassen:
- Beleuchtungseinstellungen, wie Helligkeit, Beleuchtungswinkel und/oder
- Belichtungszeit der Kamera und/oder
- Blende der Kamera.

15. Verfahren nach Anspruch 11 bis 14,
**dadurch gekennzeichnet,**
**dass** der Code (20) entsprechend der norm- und abstandsspezifischen Kalibrierungsparameter mit der normgerechten Beleuchtung in Form einer Koaxial-Beleuchtung (22), Dom-Beleuchtung (30) und/oder einer Dunkelfeld-Beleuchtung (38) beleuchtet wird und/oder
**dass** die norm- und abstandsspezifischen Kalibrierungsparameter in einem Speicher einer Kalibriereinheit (48) gespeichert werden.

## Claims

1. A code reader device (10), comprising
a camera (12) having an image sensor (14) for generating images of a detection zone (18), an auto focus unit (16) for projecting a focused image of the detection zone (18) onto the image sensor (14) and for determining a distance relative to a code (20) which has been read or an object which has been detected,
a decoding unit (46) for identifying the code (20) in the focused image and reading out its encoded information,
a calibrating unit (48) for calibrating the code reader and
a verification unit (50) for judging the code quality according to predefined criteria, wherein the auto focus unit (16) is adapted to bringing codes (20) of different sizes and different distances relative to the image sensor (14) into automatic focus and providing a distance value relative to the code which was read or the object which was detected, **characterized in that**
the calibrating unit (48) is adapted to providing norm-specific and distance-specific calibration parameters on the basis of said distance value and
the code reader device (10) comprises an illumination controller (52), which is adapted to adjusting a norm-specific and distance-specific illumination on the basis of the norm-specific and distance-specific calibration parameters by means of an illumination device (22, 30, 38) and the verification unit (50) is adapted to evaluate and verify the image of the code recorded under norm conditions with regard to verification parameter of a selected norm and to display the quality of the code.

2. The code reader device according to claim 1,
**characterized in that**
the quality of the code (20) is clearly indentificable by red, yellow or green color indicator.

3. The code reader device according to claim 1 or 2,
**characterized in that**
the norm-specific and distance-specific calibration parameters are stored in a memory of the calibrating unit (48).

4. The code reader device according to at least one of the preceding claims, **characterized in that**
the illumination device comprises a coaxial illumination (22) for generating a diffuse bright field parallel to an optical axis (26).

5. The code reader device according to at least one of the preceding claims, **characterized in that**
the illumination device comprises a preferably ring-shaped dome illumination (30) and a reflection device (34), such as a reflection dome, for generating a diffuse stray field not parallel to the optical axis (26).

6. The code reader device according to at least one of the preceding claims, **characterized in that**
the illumination device comprises a dark field illumination (38) for generating a low angle illumination, the illumination angle is an acute angle α, preferably α = 30°, and **in that** the illumination is oriented from one or more directions.

7. The code reader device according to claim 5,
**characterized in that**
the dome illumination (30) is situated in a margin of the reflector (34) encircling the end face.

8. The code reader device according to claim 6,
**characterized in that**
the dark field illumination (38) is situated in a margin of the reflector (34) encircling the end face.

9. The code reader device according to claim 6,
**characterized in that**
the dark field illumination (38) is designed as a separate illumination unit such as an illumination ring and it can be connected to the margin of the reflector (34) encircling the end face.

10. The code reader device according to at least one of the preceding claims,
**characterized in that**
the code reader device (10) is designed as a desktop apparatus, **in that** the code reader device (10) is integrated in a process metering apparatus, and/or **in that** the code reader device (10) is integrated in a handheld apparatus.

11. A method for online verification of a code (20), which is detected by an image sensor (14) of the code reader device (10) in an image, wherein the encoded information of the code (20) is read out and the code quality is judged according to predefined criteria, **characterized in that**
codes (20) of different sizes and at different distances from the image sensor (14) are brought into focus automatically, **in that** a distance value of the code (20) or the object relative to the image sensor (14) is provided, **in that** norm-specific and distance-specific calibration parameters are provided on the basis of said distance value, **in that** the read-in code (20) is verified automatically on the basis of said norm-specific and distance-specific calibration parameters and a predefined norm and wherein verification parameters of the selected norm are evaluated and a quality of the code (20) is displayed.

12. The method according to claim 11,
**characterized in that**
the quality of the code (20) is clearly identified by red, yellow or green color indicator.

13. The method according to claim 11 or 12,
**characterized in that**
a norm-specific illumination (22, 30, 38) of the code (20) is automatically adjusted on the basis of the norm-specific and distance-specific calibration parameters.

14. The method according to claim 11 to 13,
**characterized in that**
the norm-specific and distance-specific calibration parameters comprise:
- illumination settings such as brightness, illumination angle and/or
- light exposure time of the camera and/or
- the camera aperture.

15. The method according to claim 11 to 14,
**characterized in that**
the code (20) is illuminated with the norm-specific illumination in the form of a coaxial illumination (22), dome illumination (30) and/or dark field illumination (38) according to the norm-specific and distance-specific calibration parameters.

## Revendications

1. Dispositif de lecture de code (10), comprenant une caméra (12) avec un capteur d'images (14) pour générer des images d'une zone de détection (18),
une unité de mise au point automatique (16) pour reproduire une image de la zone de détection (18) mise au point sur le capteur d'images (14) et déterminer une distance par rapport à un code lu (20) ou un objet détecté,
une unité de décodage (46) afin d'identifier le code lu (20) dans l'image mise au point et lire ses informations codées
une unité de calibrage (48) pour calibrer le lecteur de code ainsi qu'une unité de vérification (50) pour évaluer la qualité du code selon des critères prédéfinis, sachant que l'unité de mise au point automatique (16) est conçue pour mettre automatiquement au point des codes (20) de différentes tailles et à différentes distances du capteur d'images (14) et pour fournir une valeur de distance par rapport au code lu ou à l'objet détecté,
**caractérisé en ce**
**que** l'unité de calibrage (48) est conçue pour fournir des paramètres de calibrage spécifiques à la norme et à la distance sur la base de la valeur de distance,
**que** le dispositif de lecture de code (10) présente une commande d'éclairage (52) qui est conçue pour régler, sur la base des paramètres de calibrage spécifiques à la norme et à la distance, un éclairage spécifique à la norme et à la distance à l'aide d'un dispositif d'éclairage (22, 30, 38) et que l'unité de vérification (50) est conçue pour évaluer et vérifier l'image du code (20) prise dans des conditions normalisées au niveau des paramètres de vérification d'une norme prédéterminée sélectionnée et pour afficher la qualité du code.

2. Dispositif de lecture de code selon la revendication 1,
**caractérisé en ce**
**que** la qualité du code (20) est clairement identifiable par une couleur au moyen d'un indicateur rouge, jaune ou vert.

3. Dispositif de lecture de code selon la revendication 1 ou 2,
**caractérisé en ce**
**que** les paramètres de calibrage spécifiques à la norme et à la distance sont enregistrés dans une mémoire de l'unité de calibrage (48).

4. Dispositif de lecture de code selon au moins l'une des revendications précédentes, **caractérisé en ce**
**que** le dispositif d'éclairage comprend un éclairage coaxial (22) pour générer un champ clair diffus parallèle à un axe optique (26).

5. Dispositif de lecture de code selon au moins l'une des revendications précédentes, **caractérisé en ce**
**que** le dispositif d'éclairage comprend un éclairage annulaire (30), de préférence en dôme, ainsi qu'un dispositif de réflexion (34), tel qu'un dôme de réflexion, pour générer un champ de dispersion diffus non parallèle à l'axe optique (26).

6. Dispositif de lecture de code selon au moins l'une des revendications précédentes, **caractérisé en ce**
**que** le dispositif d'éclairage comprend un éclairage en champ sombre (38) pour générer un éclairage à faible angle, que l'angle d'éclairage est un angle aigu a, de préférence a = 30° et que l'éclairage est orienté depuis une ou plusieurs directions.

7. Dispositif de lecture de code selon la revendication 5,
**caractérisé en ce**
**que** l'éclairage en dôme (30) est disposé dans un bord frontal périphérique du réflecteur (34).

8. Dispositif de lecture de code selon la revendication 6,
**caractérisé en ce**
**que** l'éclairage en champ sombre (38) est disposé dans un bord frontal périphérique du réflecteur (34).

9. Dispositif de lecture de code selon la revendication 6,
**caractérisé en ce**
**que** l'éclairage en champ sombre (38) est conçu comme une unité d'éclairage séparée, telle qu'un anneau d'éclairage et est raccordable au bord frontal périphérique du réflecteur (34).

10. Dispositif de lecture de code selon au moins l'une des revendications précédentes, **caractérisé en ce**
**que** le dispositif de lecture de code (10) est conçu comme un appareil de table, que le dispositif de lecture de code (10) est intégré dans un appareil de mesure de process et/ou que le dispositif de lecture de code (10) est intégré dans un appareil portable.

11. Procédé de vérification en ligne d'un code (20) qui est saisi dans une image par un capteur d'images (14) d'un dispositif de lecture de code (10), sachant que l'information codée du code (20) est lue et que la qualité du code est évaluée selon des critères prédéfinis,
**caractérisé en ce**
**que** des codes (20) de tailles différentes et à différentes distances du capteur d'images (14) sont automatiquement mis au point, qu'une valeur de distance du code (20) ou de l'objet par rapport au capteur d'images (14) est fournie, que des paramètres de calibrage spécifiques à la norme et à la distance sont fournis sur la base de la valeur de distance, que sur la base des paramètres de calibrage spécifiques à la norme et à la distance ainsi que d'une norme prédéfinie sélectionnée, une vérification automatique du code (20) enregistré dans des conditions normalisées est effectuée, sachant que des paramètres de vérification de la norme prédéfinie sont évalués et une qualité du code (20) est affiché.

12. Procédé selon la revendication 11,
**caractérisé en ce**
**que** la qualité du code (20) est clairement identifiée par une couleur au moyen d'un indicateur rouge, jaune ou vert

13. Procédé selon la revendication 11 ou 12,
**caractérisé en ce**
**que**, sur la base des paramètres de calibrage spécifiques à la norme et à la distance, un éclairage spécifique à la norme (22, 30, 38) du code (20) est automatiquement ajusté.

14. Procédé selon la revendication 11 à 13,
**caractérisé en ce**
**que** les paramètres de calibrage spécifiques à la norme et à la distance comprennent:
- des paramètres d'éclairage tels que la luminosité, l'angle d'éclairage et/ou
- le temps d'exposition à la lumière de la caméra et/ou
- l'ouverture de la caméra.

15. Procédé selon la revendication 11 à 14,
**caractérisé en ce**
**que** le code (20) est éclairé conformément aux paramètres de calibrage spécifiques à la norme et à la distance avec l'éclairage conforme à la norme sous forme d'un éclairage coaxial (22), d'un éclairage en dôme (30) et/ou un éclairage en champ sombre (38) et/ou
**que** les paramètres de calibrage spécifiques à la norme et à la distance sont enregistrés dans une mémoire d'une unité de calibrage (48).
